# EUROPÄISCHE PATENTANMELDUNG

(11) **EP 2 767 335 A1**
(43) Veröffentlichungstag der Anmeldung: **20.08.2014**
(21) Anmeldenummer: 13001547.2
(22) Anmeldetag: 26.03.2013
(51) Int. Cl.: B01J 19/24, B01J 8/02, F16L 9/18

(54) **Anlage zur Herstellung von Synthesegas**

(30) Priorität: 19.02.2013 DE 102013002834
(71) Anmelder: Linde Aktiengesellschaft, 80331 München (DE)
(72) Erfinder: Doemeland, Ulrich, D-81667 München (DE); Ludwig, Werner, D-84478 Waldkraiburg (DE); Schwarz, Ernest, D-81476 München (DE); Volkmann, Werner, D-93309 Kelheim (DE)

(57) **Zusammenfassung**

Die Erfindung betrifft eine Anlage zur Herstellung von Synthesegas, insbesondere zur Herstellung von Wasserstoff. Die Anlage umfasst einen Sammelbehälter (10) zur Sammlung und / oder Verteilung von produziertem Synthesegas (30), sowie eine strömungstechnisch mit dem Sammelbehälter (10) verbundene Fluid-Leitungseinrichtung (40). Die Fluid-Leitungseinrichtung (40) weist ein äußeres Leitungselement (41) und ein im äußeren Leitungselement (41) angeordnetes inneres Leitungselement (42) auf, wobei sowohl das äußere Leitungselement (41) als auch das innere Leitungselement (42) mit dem Sammelbehälter (10) strömungstechnisch verbunden ist.

## Beschreibung

Die Erfindung betrifft eine Anlage zur Herstellung von Synthesegas, insbesondere zur Herstellung von Wasserstoff.

Zur Herstellung von Synthesegas und insbesondere zur Herstellung von Wasserstoff werden üblicherweise Dampf-Reformer eingesetzt. Derartige Reformer bilden die Schlüsselkomponenten in vielen Anlagen der chemischen und petrochemischen Industrie zur Herstellung von Wasserstoff, Kohlenmonoxid oder anderem Synthesegas. Als Ausgangsstoff werden üblicherweise Methan oder Erdgas, Propan oder Butan verwendet. Die eigentliche Reaktion findet dabei in mit Katalysator gefüllten Rohren statt, in denen Einsatzgas im Beisein von Wasserdampf bei einer Temperatur von üblicherweise 500°C bis 900°C oder auch mehr als 900°C und sehr hohem Druck umgewandelt wird.

Weiterhin ist es bekannt, Katalysatorrohre durch eine von außen mittels Flammen erwärmbare Ummantelung hindurchzuführen, um das Katalysatorrohr und somit das Medium im Katalysatorrohr auf die erforderliche Temperatur zu bringen.

Der DE 34 29 522 C1 ist ein Reaktionsrohrsystem eines Röhrenspaltofens entnehmbar, bei dem eine Vielzahl von Reaktionsrohren in isolierten Sammelleitungen mündet. Die Sammelleitung wiederum führt zu einer Sammeleinrichtung.

Wie auch in dieser Ausgestaltung gezeigt, wird üblicherweise ein Produktstrom des Synthesegases aus dem Katalysatorrohr zunächst in ein Sammlerrohr geleitet, von dem aus das Synthesegas weiter- bzw. zwischenverteilt wird. Aus diesem Sammlerrohr gelangt das Synthesegas in ein ausgekleidetes Sammlerrohr und von dort in einen Speicher. Das heißt, dass sich im Strömungspfad relativ viele Verzweigungen befinden, die üblicherweise als T-Stücke auszugestalten sind und auf Grund Ihrer Geometrie bei den herrschenden Drücken und hohen Temperaturen mechanische Schwachstellen ausbilden. Hinzu kommt, dass der Material- sowie Fertigungs- und Montageaufwand bei derartigen Anlagen entsprechend hoch ist. Nachteilig wirken sich ebenfalls temperaturschwankungsbedingte Längenänderungen der Sammlerrohre und Verteilungsleitungen aus, die zu starken Spannungen in den Bauteilen selbst bzw. in angrenzenden Bauteilen führen.

Hiervon ausgehend liegt daher der vorliegenden Erfindung die Aufgabe zu Grunde, eine Anlage zur Verfügung zu stellen, die kostengünstig und mit geringem Volumen eine sichere und wartungsarme Produktion zur Speicherung von Synthesegas, insbesondere von Wasserstoff, ermöglicht.

Diese Aufgabe wird durch die Anlage zur Herstellung von Synthesegas gemäß Anspruch 1 erfindungsgemäß gelöst. Vorteilhafte Ausgestaltungen der erfindungsgemäßen Anlage sind in den Unteransprüchen 2 bis 10 angegeben.

Die erfindungsgemäße Anlage zur Herstellung von Synthesegas, die insbesondere zur Herstellung von Wasserstoff eingesetzt werden kann, umfasst einen Sammelbehälter zur Sammlung und/oder Verteilung von produziertem Synthesegas sowie eine strömungstechnisch mit dem Sammelbehälter verbundene Fluid-Leitungseinrichtung. Es ist erfindungsgemäß vorgesehen, dass die Fluid-Leitungseinrichtung ein äußeres Leitungselement und ein im äußeren Leitungselement angeordnetes inneres Leitungselement aufweist, wobei sowohl das äußere Leitungselement als auch das innere Leitungselement mit dem Sammelbehälter strömungstechnisch verbunden ist. D. h., dass die Fluid-Leitungseinrichtung strömungstechnisch mit dem vom Sammelbehälter eingeschlossenen Gasvolumen verbunden ist. Die Fluid-Leitungseinrichtung ist dabei an ein Katalysatorrohr angeschlossen oder ist ein Bestandteil des Katalysatorrohres, wobei das Katalysatorrohr selbst Bestandteil eines Reformers ist. Die Fluid-Leitungseinrichtung bildet somit einen Teil des Strömungspfades zwischen dem Reformer und dem Sammelbehälter aus. Der Sammelbehälter ist vorzugsweise eine Sammelleitung, an die mehrere Fluid-Leitungseinrichtungen angeschlossen sind. Bei Ausgestaltung der Fluid-Leitungseinrichtung als Bestandteil eines Katalysatorrohres dient das innere Leitungselement zur Aufnahme von Katalysatormaterial, mit dem das durch die Fluid-Leitungseinrichtung strömende Medium reagiert, so dass als Ergebnis ein dementsprechendes Reaktionsprodukt in den Sammelbehälter geleitet wird. Das heißt, dass das innere Leitungselement zur Zuführung des Synthesegases in den Sammelbehälter dient. Dadurch, dass sowohl das äußere Leituhgselement als auch das innere Leitungselement mit dem Sammelbehälter bzw. mit dem im Sammelbehälter aufgenommenen Fluid in strömungstechnischer Verbindung steht und durch die Anordnung des inneren Leitungselements im äußeren Leitungselement, ist das innere Leitungselement keinem resultierenden und vom Fluid im inneren Leitungselement radial aufgebrachten Druck ausgesetzt, da innerhalb und außerhalb des inneren Leitungselementes derselbe Druck herrscht und somit je Fläche Kräftegleichgewicht besteht.

In bevorzugter Ausgestaltung der erfindungsgemäßen Anlage zur Herstellung von Synthesegas ist vorgesehen, dass das äußere Leitungselement an eine Außenwandung des Sammelbehälters im Wesentlichen gasdicht angeschlossen ist und das innere Leitungselement wenigstens eine Isolierschicht im Inneren des Sammelbehälters zumindest teilweise durchdringt. Es kann insbesondere vorgesehen sein, dass im Inneren des Sammelbehälters zwei Isolierschichten angeordnet sind, wobei das innere Leitungselement diese Isolierschichten zumindest teilweise durchdringt und somit in den von der Behälterwandung eingeschlossenen Raum hineinragt. Der von der inneren Leitungseinrichtung realisierte Strömungspfad mündet hierbei an dem von der innersten Isolierschicht begrenzten Raum. Die Isolierschichten sind vorzugsweise aus einem im Wesentlichen wärmeisolierenden Material, wie z. B. Isolierbeton.

Um das innere Leitungselement keiner aus unterschiedlichen Druckverhältnissen resultierenden Kraft auszusetzen, muss Gas aus dem inneren Leitungselement auch auf die Außenseite des inneren Leitungselementes strömen können. Zu diesem Zweck sollte ein Abstand zwischen dem inneren Leitungselement und der Isolierschicht wenigstens 0,5 mm betragen. In Abhängigkeit von fertigungstechnisch realisierbaren Toleranzen sollte der Abstand vorzugsweise weniger als 3 mm betragen. Bei koaxialer Ausrichtung des inneren Leitungselementes in einem entsprechenden Loch in der Isolierschicht bildet der Abstand somit einen Ringspalt zwischen innerem Leitungselement und Isolierschicht aus.

In weiterer bevorzugter Ausführungsform ist vorgesehen, dass die erfindungsgemäße Anlage einen Reformer zur Herstellung von Synthesegas umfasst und die Fluid-Leitungseinrichtung an dem Reformer zwecks Leitung des im Reformer hergestellten Synthesegases zum Sammelbehälter angeschlossen ist, wobei ein Zwischenraum zwischen dem äußeren Leitungselement und dem inneren Leitungselement gegenüber dem Reformer im Wesentlichen gasdicht ausgeführt ist. Das heißt, dass nur das innere Leitungselement mit dem Reformer strömungstechnisch verbunden ist, und das äußere Leitungselement nicht strömungstechnisch mit dem Reformer verbunden ist, sondern lediglich mechanisch. Somit ist der Zwischenraum zwischen dem äußeren Leitungselement und dem inneren Leitungselement in Bezug zum Reformer gasdicht ausgeführt. Dieser Zwischenraum ist jedoch, bedingt durch den Anschluss der Fluid-Leitungseinrichtung an den Sammelbehälter und durch den Strömungspfad, der durch den Sammelbehälter realisiert wird, an dieser Stelle offen.

Bei Ausgestaltung der Fluid-Leitungseinrichtung als ein Bestandteil eines Katalysatorrohres ist die Fluid-Leitungseinrichtung vorzugsweise direkt an den Reformer angeschlossen. Bei Ausgestaltung der Fluid-Leitungseinrichtung als Anschluss an einem Katalysatorrohr ist die Fluid-Leitungseinrichtung mittelbar über das Katalysatorrohr an den Reformer angeschlossen.

In einer bevorzugten Ausführungsvariante ist vorgesehen, dass das äußere Leitungselement zumindest abschnittsweise als Metallschlauch ausgeführt ist. Dieser Metallschlauch ist als ein Druckschlauch ausgeführt, nämlich als ein Schlauch, welcher eine ausreichende Festigkeit gegenüber im Inneren des Schlauches herrschenden hohen Drücken aufweist. Dieser Druckschlauch ist vorzugsweise an einem Reduktionsteil an dessen Außenseite, gegebenenfalls unter Zwischen-Anordnung eines weiteren Rohres, nämlich eines sogenannten Rohr-Anschweißendes, angeschweißt. Das Reduktionsteil wiederum ist an einem entsprechenden Stutzen des Reformers angebracht. Als Material des Reduktionsteils kommt insbesondere hitzebeständiger Stahl, z. B. mit der Werkstoff-DIN-Nr. 1.4859, in Frage.'

Zur Wärmeisolierung des inneren Leitungselementes ist in günstiger Ausgestaltung der Fluid-Leitungseinrichtung der Zwischenraum zwischen dem Metallschlauch und dem inneren Leitungselement zumindest abschnittsweise mit einem Isoliermaterial mit einem Wärmeleitkoeffizienten von maximal 1 W/mk zumindest teilweise gefüllt. Vorzugsweise ist der Zwischenraum vollständig mit diesem Material gefüllt, wobei das Material Fasern aus einem keramischen Werkstoff umfassen kann die voneinander beabstandet sind, so dass in dem Zwischenraum zwischen dem Metallschlauch und dem inneren Leitungselement auch weiterhin ein Gasvolumen vorhanden ist. Alternativ umfasst das Isoliermaterial feuerfesten Isolierbeton.

Dadurch, dass der Zwischenraum die genannte Faser-Füllung hat, kann Gas im Zwischenraum aufgenommen werden und sich dort verteilen. Dies wirkt den beschriebenen Druckausgleich, wodurch sich einer überdruckbedingten Havarie vorbeugen bzw. einem druckbedingten Bersten des inneren Leitungselementes entgegenwirken lässt.

In einer anderen Ausführungsalternative ist vorgesehen, dass das äußere Leitungselement zumindest abschnittsweise aus einem Rohr aus einem Gusswerkstoff hergestellt ist. Dabei bietet sich insbesondere Schleuderguss an. Der Vorteil dieser Ausgestaltung liegt in der hohen Druckfestigkeit und Unempfindlichkeit gegenüber höheren Temperaturen.

Insbesondere in dieser Ausgestaltungsvariante bietet es sich an, dass das innere Leitungselement auf der der Mündung in den Sammelbehälter gegenüberliegenden Seite mittels eines konischen Anschlussbereiches im Wesentlichen gasdicht mit der Innenseite des äußeren Leitungselementes verbunden ist. Vorzugsweise sollte eine vollständig gasdichte Verbindung realisiert sein. Bei einer Fluid-Leitungseinrichtung mit einer Gesamtlänge L und einem inneren Leitungselement mit einer Länge X sollte die Gesamtlänge L und die Länge X des inneren Leitungselementes im Verhältnis von L/X =2,0 bis 3,0 stehen. Insbesondere bietet sich ein Längenverhältnis von L/X = 2,5 an. Das heißt, dass das innere Leitungselement wesentlich kürzer ist als die gesamte Fluid-Leitungseinrichtung, wobei das innere Leitungselement an dem dem Sammelbehälter zugewandten Ende der Fluid-Leitungseinrichtung angeordnet ist und aus der äußeren Leitungseinrichtung herausragt.

In einer weiteren Ausführungsalternative ist vorgesehen, dass das äußere Leitungselement zumindest abschnittsweise durch ein Metallrohr mit wenigstens einem Ausdehnungskompensationselement gebildet ist. Dieses Ausdehnungskompensationselement kann insbesondere ein Wellenbalg oder ein Faltenbalg sein. Um eine ausreichende Kompensation von temperaturbedingten Verschiebungen erreichen zu können, sollte ein äußeres Leitungselement vorzugsweise zwei einem jeweiligen Ende zugeordnete Wellenbälge aufweisen. Durch die mechanische Fixierung des inneren Leitungselementes im äußeren Leitungselement kann bei Längenänderung des äußeren Leitungselementes eine Verlagerung des inneren Leitungselementes stattfinden. Dies wird ermöglicht, indem das innere Leitungselement einfach nur in den Sammelbehälter und durch die Isolierschichten im Sammelbehälter hindurch bzw. hineinragt und nicht an dem Sammelbehälter bzw. den Isolierschichten befestigt ist. Der Spalt zwischen dem äußeren Leitungselement und dem inneren Leitungselement begünstigt dabei eine reibungsarme bzw. reibungsfreie Verlagerung des inneren Leitungselementes. Durch die Ausdehnungskompensationselemente im äußeren Leitungselement kann der Einbringung von wärmeausdehnungsbedingten Druck- oder Zugspannungen im äußeren Leitungselement und somit in der gesamten Fluid-Leitungseinrichtung vorgebeugt werden.

Der besondere Vorteil der Erfindung besteht darin, dass die innere Leitungseinrichtung während des Betriebes der Anlage durch gleiche Druckverhältnisse an ihrer Innen- und Außenseite somit keinem resultierenden Druck ausgesetzt ist. Dies wird durch den Abstand zwischen der Isolierschicht und der inneren Leitungseinrichtung im Sammelbehälter realisiert, durch den produziertes Gas an der Außenseite der inneren Leitungseinrichtung entlang strömen kann und somit in den Zwischenraum zwischen der äußeren Leitungseinrichtung und der inneren Leitungseinrichtung gelangen kann. Dadurch, dass dieser Zwischenraum lediglich mit Fasern gefüllt ist, zwischen denen Gasvolumen besteht, kann das Gas in diesen Zwischenraum eindringen und somit den gleichen Druck herstellen, der auch in der inneren Leitungseinrichtung herrscht.

Es lässt sich dadurch eine sichere sowie platz- und materialsparende Herstellung von Synthesegas realisieren, wobei zudem auf zwischengeschaltete Sammlerrohre verzichtet werden kann. Weiterhin ergeben sich Vorteile hinsichtlich der Einsparung von Isolier- bzw. Auskleidungsmaterial.

Dadurch, dass zwischengeschaltete Sammlerrohre entfallen, müssen demzufolge auch nicht mehr sicherheitstechnisch bedenkliche Verzweigungen in Strömungspfad in Form von T-Stücken realisiert werden, so dass die Anlagensicherheit wesentlich erhöht wird. Durch den geringeren Materialeinsatz ist es mit vertretbaren Kosten möglich, Materialien mit größerer Hitzebeständigkeit einzusetzen, so dass die erfindungsgemäße Anlage nicht im Zeitstandsbereich betrieben werden muss.

Weitere Einzelheiten und Vorteile der Erfindung sollen durch die nachfolgenden Figurenbeschreibungen von Ausführungsbeispielen an Hand der Figuren erläutert werden. Es zeigen
- Fig. 1: eine erfindungsgemäße Anlage zur Herstellung von Synthesegas gemäß einer ersten Ausführungsvariante in Schnittdarstellung;
- Fig. 2: eine Fluid-Leitungseinrichtung einer erfindungsgemäßen Anlage gemäß einer zweiten Ausführungsvariante zur Herstellung von Synthesegas in Schnittdarstellung;
- Fig. 3: eine Fluid-Leitungseinrichtung einer erfindungsgemäßen Anlage gemäß einer dritten Ausführungsvariante zur Herstellung von Synthesegas;

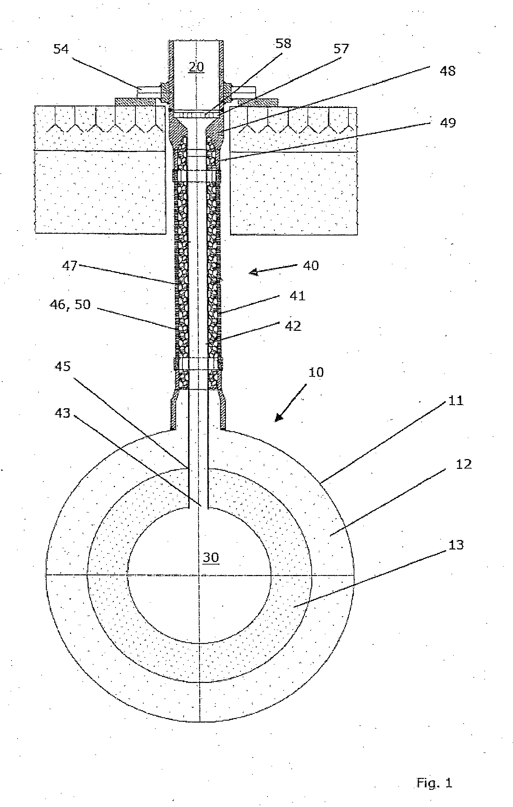

Aus Fig. 1 ist der generelle Aufbau der erfindungsgemäßen Anlage zur Herstellung von Synthesegas erkennbar. Diese Anlage umfasst einen Sammelbehälter 10, der vorzugsweise als Sammelleitung zur Weiterleitung von hergestelltem Synthesegas zu einem Speicher dient. An der Außenwandung 11 des Sammelbehälters 10 ist die Fluid-Leitungseinrichtung 40 angeschlossen, nämlich durch mechanischen Anschluss ihres äußeren Leitungselementes 41. Dieser mechanische Anschluss kann wie dargestellt durch die Zwischen-Anordnung von Rohr-Anschweißenden realisiert sein. Das innere Leitungselement 42 der Fluid-Leitungseinrichtung 40, welches wie dargestellt konzentrisch in Bezug auf das äußere Leitungselement 41 verläuft, ragt in den Sammelbehälter 10 hinein, wobei es eine erste Isolierschicht 12 sowie eine zweite Isolierschicht 13 im inneren des Sammelbehälters 10 durchdringt, so dass sich an der Innenseite der zweiten Isolierschicht 13 eine Mündung 43 ausbildet. Auf der dem Sammelbehälter 10 gegenüberliegenden Seite ist das innere Leitungselement 42 mit dem äußeren Leitungselement 41 über ein Reduktionsteil 48 mechanisch und gasdicht verbunden. Dieses Reduktionsteil ist ebenfalls über ein Rohranschweißende 49 mit einem Flansch 54 zwecks Anschluss der Fluid-Leitungseinrichtung 45 an dem Reformer 20 bzw. dessen Katalysatorrohr angeschlossen.

Das im bzw. vom Reformer 20 produzierte Synthesegas strömt somit durch das Reduktionsteil 48 und das innere Leitungselement 42 in den Sammelbehälter 10.

Dabei durchströmt es Bohrungen 58 im Trennelement 57, welches zur Positionierung vom Katalysatormaterial und/oder Filtermaterial dient.

Zwischen dem inneren Leitungselement 42 sowie der zweiten Isolierschicht 13 und der ersten Isolierschicht 12 besteht ein Abstand 45, der groß genug ist, um Synthesegas 30 aus dem Sammelbehälter 10 zwischen der Außenseite des inneren Leitungselementes 42 und der zweiten Isolierschicht 13 sowie der ersten Isolierschicht 12 hindurch zu leiten und in den Zwischenraum zwischen dem äußeren Leitungselement 41, welches hierbei als Metallschlauch 47 ausgebildet ist, und dem inneren Leitungselement 42 einströmen zu lassen. Dieser Zwischenraum 46 ist zwar mit Isoliermaterial 50 gefüllt, jedoch besteht dieses im Wesentlichen aus keramischen Fasern, die derart zueinander beabstandet sind, dass im Zwischenraum 46 weiterhin ein Gasvolumen aufnehmbar ist. Dadurch kann sich das Synthesegas 30 im Zwischenraum 46 ausbreiten und demzufolge den selben Druck auf das innere Leitungselement 42 von der Außenseite aufbringen, dem das innere Leitungselement 42 auch an seiner Innenseite ausgesetzt ist, so dass sich das innere Leitungselement in einem aus den Drücken ergebenden Kräftegleichgewicht befindet.

Das innere Leitungselement 42 kann dabei einen Außendurchmesser von 40 mm bis 45 mm haben und aus einem Material B 407-800 h oder alternativ 1.4876 h bestehen. Der das äußere Leitungselement 41 ausbildende Metallschlauch 47 ist vorzugsweise aus einem Chrom-Nickel-Material.

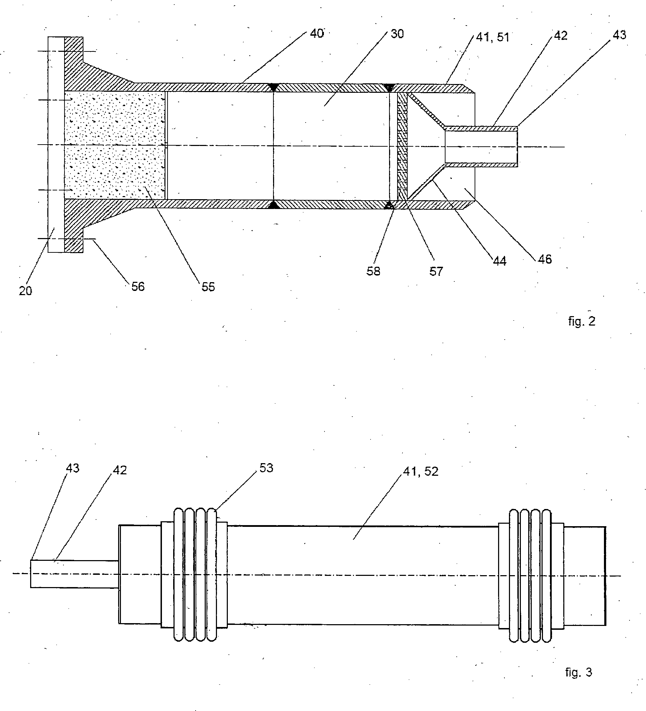

Fig. 2 ist eine Fluid-Leitungseinrichtung 40 einer anderen Ausgestaltungsvariante entnehmbar, wobei aus Gründen der Übersichtlichkeit auf die Darstellung des Sammelbehälters verzichtet wurde und der Reformer 20 lediglich angedeutet wurde. Die dargestellte Fluid-Leitungseinrichtung ist dabei nicht maßstäblich gezeigt, sondern es ist davon auszugehen, dass sie eine wesentlich längere Längserstreckung aufweist. In dieser Variante ist die Fluid-Leitungseinrichtung 40 Bestandteil eines Katalysatorrohres.

Die dargestellte Fluid-Leitungseinrichtung 40 umfasst mehrere Rohrschlüsse, wobei das dem Reformer 20 abgewandte Ende als äußeres Leitungselement 41 ausgeführt ist, welches ein Guss-Rohr 51 ist. Ein inneres Leitungselement 42 ist dabei abschnittsweise im äußeren Leitungselement 41 angeordnet, ragt jedoch an dessen anderen Seite aus dem äußeren Leitungselement 41 heraus, um eine Durchdringung einer oder mehrerer Isolierschichten 12, 13, wie in Fig. 1 gezeigt, im Sammelbehälter 10 zu realisieren. Das innere Leitungselement 42 ist über einen konischen Anschlussbereich 44 mit der Innenseite des äußeren Leitungselementes 41 mechanisch und gasdicht verbunden. Das dem Reformer 20 zugewandte Ende der Fluid-Leitungseinrichtung 40 ist mittels Verschraubungen 56 mit dem Reformer 20 verbunden.

Vom Reformer 20 bereitgestelltes Ausgangsgas gelangt durch die im Flanschbereich positionierte Keramik 55 und die Rohrschüsse der Fluid-Leitungseinrichtung 40 an hier nicht dargestelltes Katalysatormaterial, welches durch das Trennelement 57 im Wesentlichen fixiert ist, wobei dadurch hergestelltes Synthesegas weiterhin durch die Bohrungen 58 im Trennelement 57 hindurch strömt und somit durch das innere Leitungselement 42 in den nicht dargestellten Sammelbehälter gelangt. Auch bei Anwendung dieser Variante der Fluid-Leitungseinrichtung 40 ist vorgesehen, dass zwischen der Außenseite des inneren Leitungselementes 42 und der oder den Isolierschichten im Sammelbehälter 10 ein derartiger Abstand herrscht, dass Synthesegas sowohl an der Innenseite des inneren Leitungselementes 42 als auch an dessen Außenseite vorhanden ist, so dass sich das innere Leitungselement in einem druckausgeglichenem Zustand befindet. Dadurch, dass das äußere Leitungselement 41 aus einem Guss-Rohr 51 besteht, ist gewährleistet, dass das äußere Leitungselement 41 dem Überdruck sowie den Temperaturen in der Fluid-Leitungseinrichtung 40 standhält.

Fig. 3 zeigt eine weitere Ausführungsalternative der Fluid-Leitungseinrichtung 40, bei der das äußere Leitungselement 41 als ein Metallrohr 52 mit mehreren, im Paket angeordneten Ausdehnungskompensationselementen 53 ausgestaltet ist. Die Ausdehnungskompensationselemente 53 sind hier als Wellenbälge ausgeführt. Abschnittsweise eingeführt befindet sich im äußeren Leitungselement 41 das innere Leitungselement 42, welches teilweise aus dem äußeren Leitungselement 41 herausragt.

Entsprechend der beschriebenen Ausgestaltung gemäß der Ausführungsvariante in Fig. 2 ist auch hier vorgesehen, dass das in Fig. 3 dargestellte innere Leitungselement 42 durch die Isolierschicht bzw. Isolierschichten im Sammelbehälter 10 zumindest teilweise hindurchführt, um im Sammelbehälter 10 eine Mündung 43 auszubilden, aus der produziertes Synthesegas in den Sammelbehälter 10 strömen kann. Auch hier ist vorgesehen, dass durch einen Abstand zwischen dem inneren Leitungselement 42 und den Isolierschichten dem Synthesegas die Möglichkeit gegeben ist, an der Außenseite des inneren Leitungselementes 42 entlang zu strömen und somit in den Zwischenraum zwischen dem äußeren Leitungselement 41 und dem inneren Leitungselement 42 zu gelangen, um das innere Leitungselement 42 im Wesentlichen drucklos zu halten. Die in Fig. 3 dargestellte Fluid-Leitungseinrichtung 40 kann zum Beispiel anstelle des in Fig. 2 dargestellten Guss-Rohres 51 an weitere Rohrschüsse der Fluid-Leitungseinrichtung 40 angeschlossen sein.

Das Metallrohr 52 kann relativ dünnwandig ausgeführt sein, da zumindest temperaturbedingte Längenänderungen durch die Ausdehnungskompensationselemente 53 kompensiert werden können, die Versätze der einzelnen Segmente des Metallrohres 52 in Bezug zueinander ermöglichen.

| **Bezugszeichenliste** | |
|---|---|
| Sammelbehälter | 10 |
| Außenwandung | 11 |
| Erste Isolierschicht | 12 |
| Zweite Isolierschicht | 13 |
| Reformer | 20 |
| Synthesegas | 30 |
| Fluid-Leitungseinrichtung | 40 |
| äußeres Leitungselement | 41 |
| inneres Leitungselement | 42 |
| Mündung | 43 |
| konischer Anschlussbereich | 44 |
| Abstand | 45 |
| Zwischenraum | 46 |
| Metallschlauch | 47 |
| Reduktionsteil | 48 |
| Rohr-Anschweißende | 49 |
| Isoliermaterial | 50 |
| Guss-Rohr | 51 |
| Metallrohr | 52 |
| Ausdehnungskompensationselement | 53 |
| Flansch | 54 |
| Keramik | 55 |
| Verschraubung | 56 |
| Trennelement | 57 |
| Bohrung | 58 |

## Patentansprüche

1. Anlage zur Herstellung von Synthesegas, insbesondere zur Herstellung von Wasserstoff, umfassend einen Sammelbehälter (10) zur Sammlung und/ oder Verteilung von produziertem Synthesegas (30) sowie eine strömungstechnisch mit dem Sammelbehälter (10) verbundene Fluid-Leitungseinrichtung (40),
**dadurch gekennzeichnet,**
**dass** die Fluid-Leitungseinrichtung (40) ein äußeres Leitungselement (41) und ein im äußeren Leitungselement (41) angeordnetes inneres Leitungselement (42) aufweist, wobei sowohl das äußere Leitungselement (41) als auch das innere Leitungselement (42) mit dem Sammelbehälter (10) strömungstechnisch verbunden ist.

2. Anlage zur Herstellung von Synthesegas nach Anspruch 1,
**dadurch gekennzeichnet,**
**dass** das äußere Leitungselement (41) an eine Außenwandung (11) des Sammelbehälters (10) im Wesentlichen gasdicht angeschlossen ist und das innere Leitungselement (42) wenigstens eine Isolierschicht (12, 13) im Inneren des Sammelbehälters (10) zumindest teilweise durchdringt.

3. Anlage zur Herstellung von Synthesegas nach Anspruch 2,
**dadurch gekennzeichnet,**
**dass** zwischen dem inneren Leitungselement (42) und der Isolierschicht (12, 13) ein Abstand von 0,5 mm - 3 mm besteht.

4. Anlage zur Herstellung von Synthesegas nach einem der vorhergehenden Ansprüche,
**dadurch gekennzeichnet,**
**dass** die Anlage einen Reformer (20) zur Herstellung von Synthesegas (30) umfasst und die Fluid-Leitungseinrichtung (40) an den Reformer (20) zwecks Leitung des im Reformer (20) hergestellten Synthesegases (30) zum Sammelbehälter (10) angeschlossen ist, wobei ein Zwischenraum (46) zwischen dem äußeren Leitungselement (41) und dem inneren Leitungselement (42) gegenüber dem Reformer (20) im Wesentlichen gasdicht ausgeführt ist.

5. Anlage zur Herstellung von Synthesegas nach einem der vorhergehenden Ansprüche,
**dadurch gekennzeichnet,**
**dass** das äußere Leitungselement (41) zumindest abschnittsweise als Metallschlauch (47) ausgeführt ist.

6. Anlage zur Herstellung von Synthesegas nach Anspruch 5,
**dadurch gekennzeichnet,**
**dass** der Zwischenraum (46) zwischen dem Metallschlauch (47) und dem inneren Leitungselement (42) zumindest abschnittsweise mit einem Isoliermaterial (50) mit einem Wärmeleitkoeffizienten von maximal 1 W/mK zumindest teilweise gefüllt ist.

7. Anlage zur Herstellung von Synthesegas nach einem der Ansprüche 1 bis 4,
**dadurch gekennzeichnet,**
**dass** das äußere Leitungselement (41) zumindest abschnittsweise aus einem Rohr (51) aus einem Gusswerkstoff gebildet ist.

8. Anlage zur Herstellung von Synthesegas nach einem der vorhergehenden Ansprüche,
**dadurch gekennzeichnet,**
**dass** das innere Leitungselement (42) auf der der Mündung (43) in den Sammelbehälter (10) gegenüberliegenden Seite mittels eines konischen Anschlussbereiches (44) im Wesentlichen gasdicht mit der Innenseite des äußeren Leitungselementes (41) verbunden ist.

9. Anlage zur Herstellung von Synthesegas nach einem der Ansprüche 1 bis 4,
**dadurch gekennzeichnet,**
**dass** das äußere Leitungselement (41) zumindest abschnittsweise aus einem Metallrohr (52) mit wenigstens einem Ausdehnungskompensationselement (53) gebildet ist.

10. Anlage zur Herstellung von Synthesegas nach Anspruch 9,
**dadurch gekennzeichnet,**
**dass** das Ausdehnungskompensationselement (53) ein Wellenbalg oder ein Faltenbalg ist.
